Europäisches Patentamt

European Patent Office

Office européen des brevets

(11) Veröffentlichungsnummer: **0 320 744**
**A2**

## (12) EUROPÄISCHE PATENTANMELDUNG

(21) Anmeldenummer: 88120312.9

(51) Int. Cl.⁴: **G11B 27/32 , G11B 27/34**

(22) Anmeldetag: 06.12.88

(30) Priorität: 15.12.87 DE 3742469

(43) Veröffentlichungstag der Anmeldung:
21.06.89 Patentblatt 89/25

(84) Benannte Vertragsstaaten:
AT BE DE ES FR GB IT NL

(71) Anmelder: **Nokia Graetz Gesellschaft mit beschränkter Haftung**
**Östliche-Karl-Friedrich-Strasse 132**
**D-7530 Pforzheim(DE)**

(72) Erfinder: **Apitz, Siegfried, Dipl.-Ing.**
**Ludwig-Windthorst-Strasse 24**
**D-7530 Pforzheim(DE)**
Erfinder: **Müller, Helmut, Dipl.-Ing.**
**Riedstrasse 32**
**D-7530 Pforzheim(DE)**

(54) **Videorecorder mit einer Einrichtung zur Aufzeichnung einer zusätzlichen Steuersignalspur auf ein Videoband.**

(57) Ein Videorecorder mit einer Einrichtung (11), die bei der Aufzeichnung einer Videodarbietung auf ein Videoband (3) zusätzlich eine Steuersignalspur (14) auf das Videoband aufzeichnet und die durch die Ansteuerung eines Steuereinganges (27) eine zweite Information auf die Steuersignalspur aufzeichnet, wird bei jedem Einschalten der Aufzeichnungsanordnung (7) des Videorecorders so ausgelöst, daß sie bei jedem Einschalten des Aufzeichnungsbetriebszustandes des Recorders oder bei jedem Betätigen des Bedienungselementes (29) für diesen Betriebszustand eine Anfangsmarkierung (22) als zweite Information in die Steuersignalspur des Videobandes (3) einschreibt.

Fig.1

EP 0 320 744 A2

# Videorecorder mit einer Einrichtung zur Aufzeichnung einer zusätzlichen Steuersignalspur auf ein Videoband

Die Erfindung betrifft einen Videorecorder nach dem Oberbegriff des Anspruches 1.

Bei Videokassetten, insbesondere bei solchen mit einer langen Spieldauer, besteht häufig der Wunsch, auf das Videoband aufgezeichnete Sendungen durch besondere Hilfsmittel auf dem Videoband schnell auffindbar zu machen. Aus der DE-Zeitschrift "Funkschau" 1987, Heft 8, Seite 35 bis 38, ist es bekannt, auf die sogenannte Kontrollspur einen Zeitcode als zweite Information aufzuzeichnen. Die Kontrollspur des Videobandes enthält Steuerimpulse einer bestimmten Impulslänge zur Synchronisierung der Bildwiedergabe vom Videoband. Die Synchronisierung findet mittels der Vorderflanken der Steuerimpulse statt. Die Lage der Rückflanken wird bei der bekannten Anordnung für eine zweite Information in digitaler Form auf der Steuersignalspur des bekannten Videobandes ausgenutzt. Die zweite digitale Information ist ein Zeitcode, der die bisher abgelaufene Laufzeit des Videobandes fortlaufend darstellt. Eine Zeitangabe erstreckt sich bei dem bekannten Videoband über 50 Steuerimpulse, so daß nur eine Zeitangabe mit einer Genauigkeit von 2 Sekunden vorliegt. Außerdem beansprucht die Einrichtung zur Aufzeichnung dieses Zeitcodes einen verhältnismäßig großen Aufwand, der nicht dazu geeignet erscheint, derartige Einrichtungen in breiterem Umfang bei Videogeräten der Unterhaltungselektronik zu verwenden.

Der Erfindung liegt die Aufgabe zugrunde, ohne einen wesentlichen zusätzlichen Aufwand in einem Videogerät der Unterhaltungselektronik ein leichtes Auffinden von aufgezeichneten Videodarbietungen auf einem Videoband zu ermöglichen. Diese Aufgabe wird nach der Erfindung durch die im kennzeichnenden Teil des Anspruches 1 angegebenen Maßnahmen in vorteilhafter Weise gelöst.

Die Erfindung erfordert lediglich eine einfache zusätzliche Einrichtung im Signalweg der Steuersignale für die Steuersignalspur des Videobandes, die nur ein einfaches zusätzliches Schaltsignal für die Steuersignalspur erzeugt. Zum Abtasten eines nach der Erfindung markierten Videobandes ist es lediglich erforderlich, das Markiersignal auf der Steuersignalspur als Schaltsignal zu erfassen. Weitere Daten müssen nicht aus einem derartigen Markiersignal gelesen werden. Das bedeutet aber, daß ein Markiersignal nach der Erfindung wesentlich schneller ausgelesen werden kann als Markiersignale, die einen alphanumerischen Wert enthalten und deren Wert identifiziert werden muß, um den Anfang der aufgezeichneten Videodarbietung zu erkennen.

Die Unteransprüche 2 bis 5 kennzeichnen vorteilhafte Ausgestaltungen der Erfindung. Eine im Anspruch 6 angegebene vorteilhafte Weiterbildung der Erfindung ermöglicht dem Benutzer eines erfindungsgemäßen Videorecorders, sich die Bandposition des Anfanges einer auf das Videoband aufgezeichneten Videodarbietung auch dann zu notieren, wenn er die Aufzeichnung der Videodarbietung nicht selbst am Videorecorder eingeschaltet hat, sondern wenn die Aufzeichnung der Videodarbietung aufgrund eines vom Benutzer eingegebenen Programmwunsches selbsttätig von dem Videorecorder eingeschaltet und aufgezeichnet wurde.

Die Erfindung wird nachfolgend anhand eines vorteilhaften Ausführungsbeispieles näher erläutert. Die zugehörige Zeichnung zeigt in

Fig. 1 ein Blockschaltbild des die Aufzeichnung betreffenden Teiles eines Videorecorders,

Fig. 2 eine schematische Darstellung der Steuersignalspur eines in einen Videorecorder gemäß Fig. 1 eingelegten Videobandes mit einer Anfangsmarkierung.

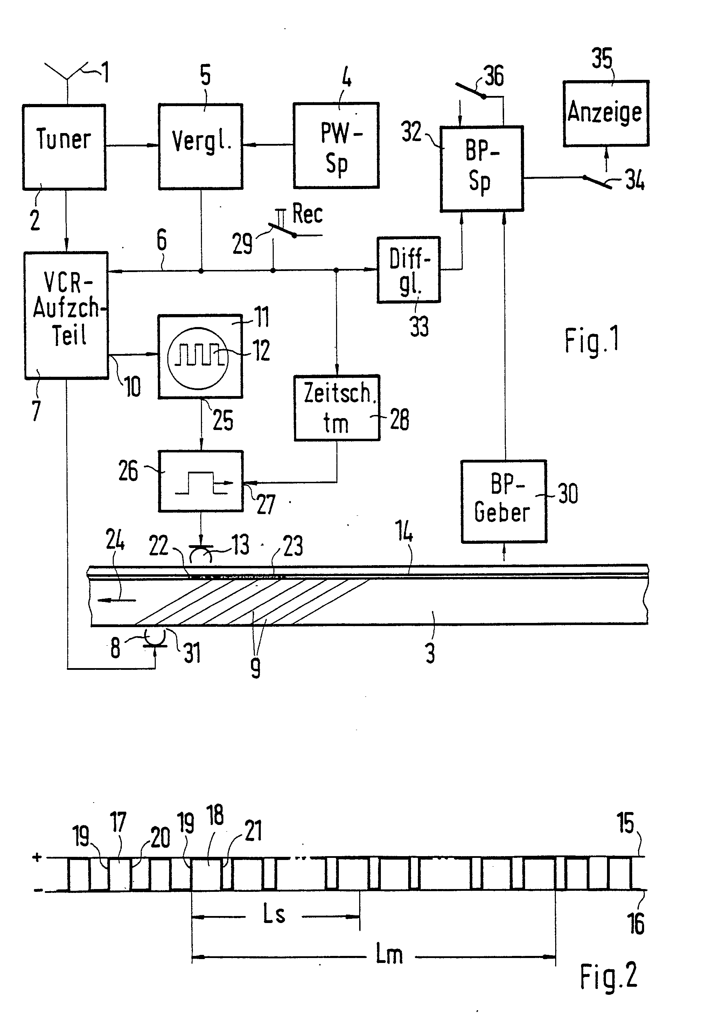

In Fig. 1 ist der die Aufzeichnung betreffende Teil eines Videorecorders in einem Blockschaltbild schematisch dargestellt. Der Videorecorder ist dazu eingerichtet, eine über eine Antenne 1 empfangene und in einem Tuner 2 aufbereitete Videodarbietung oder -sendung auf ein Videoband 3 aufzuzeichnen. Die Videodarbietung ist beispielsweise als Programmwunsch PW vom Benutzer des Gerätes in einen Programmwunschspeicher 4 eingespeichert worden. Der die Videodarbietung übertragende Sender überträgt gleichzeitig mit der Videodarbietung ein die Videodarbietung kennzeichnendes Kennungssignal, das auch mit dem Programmwunsch im Programmwunschspeicher 4 gespeichert ist. Stellt eine Vergleicheranordnung 5 eine Übereinstimmung des übertragenen Kennungssignales mit einem im Programmwunschspeicher 4 gespeicherten Kennungssignal fest, erzeugt sie während der Dauer der Übereinstimmung auf einer Leitung 6 ein Koinzidenzsignal, das als Einschaltsignal für eine Aufzeichnungsanordnung 7 des Videorecorders gewertet wird. In der Aufzeichnungsanordnung 7 wird die von dem Tuner 2 gelieferte Videodarbietung aufzeichnungsgerecht aufbereitet und von Aufzeichnungsköpfen 8 halbbildweise auf Schrägspuren 9 auf das Videoband 3 aufgezeichnet. Außerdem wird über einen Synchronausgang 10 ein Impulsgenerator 11 synchronisiert, dessen Steuerimpulse 12 über einen Aufzeichnungskopf 13 auf eine Steuersignalspur 14 des Videobandes 3 aufgezeichnet werden.

Die Aufzeichnung auf der Steuersignalspur 14 ist in Fig. 2 schematisch dargestellt. In dem in dieser Figur dargestellten Diagramm bedeuten die Linie 15 eine positive Magnetisierung des Videobandes 3 an der Stelle der Steuersignalspur 14 und die Linie 16 eine negative Magnetisierung der Steuersignalspur 14. Das auf die Steuersignalspur 14 aufgezeichnete Steuersignal stellt eine Impulsreihe aus Impulsen 17 und 18 dar, deren Vorderflanke 19 den Beginn eines Vollbildes kennzeichnet und die Wiedergabe der auf das Videoband 3 aufgezeichneten Videodarbietung synchronisiert. Die Rückflanke 20, 21 hat keinen Einfluß auf diese Synchronisierung. Im Normalfall, für den die Impulse 17 gelten, ist ein Tastverhältnis von etwa 1:1 festgelegt. Durch Verändern der Lage der Rückflanke 21 der Impulse 18 gegenüber der Normallage der Rückflanke 20 der Impulse 17 kann eine zweite Information, beispielsweise eine Anfangsmarkierung 22 in die Steuersignalspur 14 des Videobandes 3 aufgezeichnet werden. Im dargestellten Ausführungsbeispiel besteht die Anfangsmarkierung aus einer Markierungsstrecke 23, die aus einer größeren Anzahl Markierungsimpulsen 18 gebildet ist und deren Anfang durch den ersten Markierungsimpuls der Markierungsimpulsreihe in der Wiedergaberichtung 24 des Videobandes 3 gekennzeichnet ist. Die Streckenlänge Lm der Markierungsstrecke 23 ist größer als eine vorgegebene Genauigkeitsstrecke Ls für die Suchgenauigkeit zum Auffinden der Anfangsmarkierung 23.

Zum Aufzeichnen der Anfangsmarkierung 22 in die Steuersignalspur 14 des Videobandes 3 ist zwischen den Ausgang 25 des Impulsgenerators 11 und den Aufzeichnungskopf 13 ein Impulsdehner 26 geschaltet, der bei einem Steuersignal an seinem Steuereingang 27 die Rückflanke 21 der von ihm übertragenen Steuerimpulse 12 des Impulsgenerators 11 gegenüber der Normallage der Rückflanke 20 dieser Impulse 17 zeitlich versetzt. Die Länge Lm der Markierungstrecke 23 wird durch eine Zeitschaltung 28 bestimmt, die vom Schaltsignal für die Aufzeichnungsanordnung 7 auf der Leitung 6 ausgelöst wird und während einer Markierungsdauer tm das Steuersignal für den Impulsdehner 26 erzeugt.

Das Schaltsignal für die Aufzeichnungsanordnung 7 auf der Leitung 6 kann auch mittelbar oder unmittelbar von einem Schalter 29 erzeugt werden, der von einem Bedienungselement Rec des Videorecorders vom Benutzer des Gerätes betätigt wurde.

Der in Fig. 1 dargestellte Videorecorder enthält außerdem eine Einrichtung 30 zur Ermittlung der an der Aufzeichnungsstelle 31 befindlichen Bandposition des Videobandes 3. Die von dieser Einrichtung 30 ausgegebene Bandposition des Videobandes 3 wird jeweils am Anfang des auf der Leitung 6 befindlichen Schaltsignales für die Aufzeichnungsanordnung 7 in einen Bandpositionsspeicher 32 eingespeichert. Das Einspeichersignal hierzu wird beispielsweise in einer Differenzierschaltung 33 gebildet. Der Benutzer des Videorecorders kann die in dem Bandpositionsspeicher 32 gespeicherten Bandpositionen über einen Schalter 34 zur Anzeige auf einer Anzeigeanordnung 35 abrufen und sich dadurch die Bandpositionen notieren, an denen der Videorecorder eine Anfangsmarkierung 22 auf die Steuersignalspur 14 des Videobandes 3 aufgezeichnet hat. Der Bandpositionsspeicher 32 kann vom Benutzer des Videorecorders durch die Betätigung eines Löschschalters 36 gelöscht werden.

## Ansprüche

1. Videorecorder mit einer Einrichtung, die bei der Aufzeichnung einer Videodarbietung auf ein Videoband zusätzlich eine Steuersignalspur auf das Videoband aufzeichnet und in die Steuersignale der Steuersignalspur eine zweite Information einschreibt, **dadurch gekennzeichnet,** daß die Einrichtung (11, 26) bei jedem Einschalten des Aufzeichnungsbetriebszustandes des Recorders zusätzlich eine Anfangsmarkierung (22) als zweite Information in die Steuersignalspur (14) einschreibt.

2. Videorecorder nach Anspruch 1, dadurch gekennzeichnet, daß im Aufzeichnungsbetriebszustand des Recorders jedes Betätigen eines diesen Betriebszustand einschaltenden Bedienungselementes (29) eine Anfangsmarkierung (22) als zweite Information in die Steuersignalspur (14) des Videobandes (3) einschreibt.

3. Videorecorder nach Anspruch 1 oder 2, dadurch gekennzeichnet, daß die Anfangsmarkierung (22) aus einem oder mehreren Markierungsimpulsen (18) besteht.

4. Videorecorder nach Anspruch 3, dadurch gekennzeichnet, daß der Markierungsimpuls (18) ein jeweils ein Vollbild der Videoaufzeichnung kennzeichnender Kontrollimpuls (17) ist, dessen Rückflanke (21) gegenüber der Normallage (20) zeitlich versetzt ist.

5. Videorecorder nach einem der vorhergehenden Ansprüche, dadurch gekennzeichnet, daß die Anfangsmarkierung (22) eine Markierstrecke (23) ist, deren Streckenlänge (Lm) größer ist als eine bestimmte, vorgegebene Suchgenauigkeit (Ls) zum Auffinden der Anfangsmarkierung.

6. Videorecorder nach einem der vorhergehenden Ansprüche, gekennzeichnet
- durch einen Anzeigespeicher (32), der bei jedem Aufzeichnen einer Anfangsmarkierung (22) auf die Steuersignalspur (14) des Videobandes (3) die Bandposition (PB) speichert, die eine Einrichtung (30) zur Ermittlung der an der Aufzeichnungsstelle (31) befindlichen Bandposition des Videobandes ausgibt,
- und durch eine Anzeigeanordnung (35), die bei einem Abruf die im Anzeigespeicher gespeicherten Bandpositionen anzeigt.

Fig.1

Fig.2